(19)

Europäisches
Patentamt
European
Patent Office
Office européen
des brevets

(11) **EP 4 390 682 A1**

(12) **EUROPEAN PATENT APPLICATION**
published in accordance with Art. 153(4) EPC

(43) Date of publication:
**26.06.2024  Bulletin 2024/26**

(21) Application number: **22874620.2**

(22) Date of filing: **13.09.2022**

(51) International Patent Classification (IPC):
**G06F 9/48** (2006.01)

(52) Cooperative Patent Classification (CPC):
**G06F 9/4881; G06F 18/24;** G06F 2209/486;
Y02D 10/00

(86) International application number:
**PCT/CN2022/118551**

(87) International publication number:
**WO 2023/051233 (06.04.2023 Gazette 2023/14)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.09.2021  CN 202111164854**

(71) Applicant: **Huawei Technologies Co., Ltd.
Shenzhen, Guangdong 518129 (CN)**

(72) Inventors:
• **XU, Hu
  Shenzhen, Guangdong 518129 (CN)**
• **YAO, Xin
  Shenzhen, Guangdong 518129 (CN)**
• **LU, Tao
  Shenzhen, Guangdong 518129 (CN)**

(74) Representative: **Epping - Hermann - Fischer
Patentanwaltsgesellschaft mbH
Schloßschmidstraße 5
80639 München (DE)**

(54) **TASK SCHEDULING METHOD, DEVICE, APPARATUS AND MEDIUM**

(57)     A task scheduling method and apparatus, a device, and a medium are provided. According to the task scheduling method, a target running category of an application is determined from a plurality of predefined running categories based on a running status of the application (510), where applications in different running categories in the plurality of predefined running categories have different importance levels. A target classification priority corresponding to the target running category is determined (520). A target scheduling priority of a target task in the application is determined based on at least the target classification priority (530). A resource of a processing system is scheduled to the target task based on the target scheduling priority, for running of the target task (540). Therefore, a scheduling priority of a task in the application may be dynamically changed based on a change in a classification priority of the application. In this way, the scheduling priority of the task is always related to the running status of the application, resource scheduling is more proper, and user experience is improved.

500

Determine a target running category of an application from a plurality of predefined running categories based on a running status of the application — 510

Determine a target classification priority corresponding to the target running category — 520

Determine a target scheduling priority of a target task in the application based on at least the target classification priority — 530

Schedule a resource of a processing system to the target task based on the target scheduling priority, for running of the target task — 540

FIG. 5

EP 4 390 682 A1

**Description**

**TECHNICAL FIELD**

Embodiments disclosed in this application mainly relate to the field of computer technologies, and more specifically, to a task scheduling method and apparatus, a device, and a medium.

**BACKGROUND**

Various applications are usually installed on an electronic device, and a started application has one or more tasks to run. These tasks are also referred to as "threads". The electronic device allocates a resource of a processing system, for example, a resource of a central processing unit (CPU), to each task through task scheduling, for running of the task.

During task scheduling, a scheduler can allocate a resource to a task based on a priority. However, current task priority allocation is inappropriate, and a case in which a task in a background application has a higher priority than a task in a foreground application may occur. As a result, an appropriate resource cannot be scheduled to an important task in a foreground, processing efficiency is low, and a delay is long. This greatly improves user experience. Therefore, an improved task scheduling solution is expected to be proposed.

**SUMMARY**

Embodiments disclosed in this application provide a task scheduling solution.

According to a first aspect disclosed in this application, a task scheduling method is provided. The method includes: determining a target running category of an application from a plurality of predefined running categories based on a running status of the application, where applications in different running categories in the plurality of predefined running categories have different importance levels; determining a target classification priority corresponding to the target running category; determining a target scheduling priority of a target task in the application based on at least the target classification priority; and scheduling a resource of a processing system to the target task based on the target scheduling priority, for running of the target task.

According to embodiments disclosed in this application, a scheduling priority of a task in the application may be dynamically changed based on a change in a classification priority of the application. In this way, the scheduling priority of the task can always be related to the running status of the application, and flexible and dynamic task scheduling is performed based on importance levels of applications in different running statuses, so that resource scheduling is more proper, and user experience is improved.

In an implementation of the first aspect, the determining a target scheduling priority of a target task in the application includes: determining a target task priority that is set for the target task; and determining the target scheduling priority of the target task based on the target task priority and the target classification priority. By introducing a task priority, the task priority can be used to differentiate scheduling priorities of different tasks of applications in each running category within a priority range.

In an implementation of the first aspect, the plurality of running categories respectively correspond to a plurality of classification priorities. In an implementation of the first aspect, if an importance level of an application in a first running category in the plurality of running categories is greater than that of an application in a second running category in the plurality of running categories, a classification priority corresponding to the first running category is higher than a classification priority corresponding to the second running category. In this way, an application in a more focused and important running status can be classified into a running category that may have a higher task scheduling level.

In an implementation of the first aspect, if the target running category is a first running category in the plurality of running categories, the target scheduling priority falls within a first priority range associated with the first running category; and if an importance level of the first running category is greater than that of a second running category in the plurality of running categories, a priority within the first priority range is higher than a priority within a second priority range associated with the second running category. By associating different running categories with different priority ranges, task scheduling priorities of applications in different running categories can be distinguished.

In an implementation of the first aspect, the plurality of predefined running categories include at least an interaction category; a perception category, where an importance level of the perception category is lower than that of the interaction category; a default category, where an importance level of the default category is lower than that of the perception category; and a background category, where an importance level of the background category is lower than that of the default category. Based on such a category classification, an application that a user interacts with and an application with a task that is perceptible by the user may receive resource scheduling at a higher priority.

In an implementation of the first aspect, the determining a target running category of the application includes:

if the application runs in a foreground and duration since a previous operation performed by the user on the application is less than threshold duration, determining that the application is in the interaction category. In an implementation of the first aspect, the determining a target running category of the application includes: if the application is in the interaction category and the duration since the previous operation performed by the user on the application exceeds the threshold duration, determining to switch the application from the interaction category to the perception category. In an implementation of the first aspect, the determining a target running category of the application includes: if the application is switched to run in a background and no task that is perceptible by the user runs in the application, determining that the application is in the background category. In an implementation of the first aspect, the determining a target running category of the application includes: if the application is switched to run in the foreground or the application runs in the background and has at least one task that is perceptible by the user, determining that the application is in the perception category. In an implementation of the first aspect, the determining a target running category of the application includes: if the application is not in any one of the interaction category, the perception category, and the background category, determining that the application is in the default category.

In an implementation of the first aspect, a classification priority corresponding to the interaction category is higher than a classification priority corresponding to the perception category; the classification priority corresponding to the perception category is higher than a classification priority corresponding to the default category; and the classification priority corresponding to the default category is higher than a classification priority corresponding to the background category. In an implementation of the first aspect, if the target running category is the interaction category, the target scheduling priority falls within a first priority range; if the target running category is the perception category, the target scheduling priority falls within a second priority range, and a priority in the second priority range is lower than a priority in a first priority range; if the target running category is the default category, the target scheduling priority falls within a third priority range, and a priority in the third priority range is lower than a priority in a second priority range; or if the target running category is the background category, the target scheduling priority falls within a fourth priority range, and a priority in the fourth priority range is lower than a priority in a third priority range.

According to the example implementations disclosed in this application, it can be ensured that the application that interacts with the user in a short time has a higher task scheduling priority, and that the application that runs in the background and in which a task that is perceptible by the user runs can also obtain a higher task scheduling priority. Therefore, classification of different running categories is more proper.

In an implementation of the first aspect, the scheduling a resource of a processing system to the target task based on the target scheduling priority includes: determining, from a predefined mapping table between a scheduling priority and a weight, a target weight corresponding to the target scheduling priority; and allocating the resource of the processing system to the target task based on a sum of the target weight and a weight of a task in a ready queue. By introducing weights, resources can be allocated more properly.

In an implementation of the first aspect, the method further includes: if the target scheduling priority is higher than a first threshold priority, determining running duration of the target task in the processing system in a first predefined time period; if the running duration exceeds first threshold duration, adjusting the target scheduling priority of the target task to a first scheduling priority, where the first scheduling priority is lower than the target scheduling priority; and scheduling the resource of the processing system to the target task based on the adjusted first scheduling priority, for subsequent running of the target task. In this way, if a task with a higher scheduling priority is scheduled and occupies a resource for a long time, the scheduling priority of the task may be lowered, so that a task with a lower scheduling priority may obtain a scheduling opportunity.

In an implementation of the first aspect, the method further includes: if the target scheduling priority is lower than a second threshold priority, determining waiting-to-run duration of the target task in the processing system in a second predefined time period; if the waiting-to-run duration exceeds second threshold duration, adjusting the target scheduling priority of the target task to a second scheduling priority, where the second scheduling priority is higher than the target scheduling priority; and scheduling the resource of the processing system to the target task based on the adjusted second scheduling priority, for subsequent running of the target task. In this way, a compensation mechanism may be used for a target task with a lower scheduling priority, to avoid long-term waiting of the task.

According to a second aspect disclosed in this application, an electronic device is provided. The electronic device includes: at least one computing unit; and at least one memory, where the at least one memory is coupled to the at least one computing unit and stores instructions for execution by the at least one computing unit, and when the instructions are executed by the at least one computing unit, the device is enabled to perform the method according to any one of the first aspect or the implementations of the first aspect.

According to a third aspect disclosed in this application, a task scheduling apparatus is provided. The apparatus includes: a category determining unit, configured to determine a target running category of an application from a plurality of predefined running categories based on a running status of the application, where applications in different running categories in the plurality of predefined running categories have different importance levels; a classification priority determining unit, configured to determine a target classification priority corresponding to the target running category; a scheduling priority determining unit, configured to determine a target scheduling priority of a target task in the application based on at least the target classification priority; and a scheduling unit, configured to schedule a resource of a processing system to the target task based on the target scheduling priority, for running of the target task.

According to a fourth aspect disclosed in this application, a computer-readable storage medium is provided. The computer-readable storage medium stores one or more computer instructions, and the one or more computer instructions are executed by a processor to implement the method according to any one of the first aspect or the implementations of the first aspect.

According to a fifth aspect disclosed in this application, a computer program product is provided. The computer program product includes computer-executable instructions. When the computer-executable instructions are executed by a processor, a computer is enabled to execute instructions of some or all steps of the method according to any one of the first aspect or the implementations of the first aspect

It may be understood that the task scheduling apparatus in the second aspect, the electronic device in the third aspect, the computer storage medium in the fourth aspect, or the computer program product in the fifth aspect are all configured to implement the method according to the first aspect. Therefore, the explanation or description of the first aspect is equally applicable to the second aspect, the third aspect, the fourth aspect, and the fifth aspect. In addition, for beneficial effects that can be achieved in the second aspect, the third aspect, the fourth aspect, and the fifth aspect, refer to beneficial effects in corresponding methods. Details are not described herein again. These aspects and other aspects of the present invention are more concise and easier to understand in descriptions of the following (a plurality of) embodiments.

**BRIEF DESCRIPTION OF DRAWINGS**

The foregoing and other features, advantages, and aspects of embodiments disclosed in this application become more apparent in conjunction with the accompanying drawings and with reference to the following detailed description. In the accompanying drawings, same or similar reference numerals represent same or similar elements.

FIG. 1 is a schematic diagram of an example environment in which a plurality of embodiments disclosed in this application can be implemented;
FIG. 2 is an example switching diagram of some running categories according to some embodiments disclosed in this application;
FIG. 3 is an example of a CGroup tree according to some embodiments disclosed in this application;
FIG. 4 is an example mapping of CGroup allocation for applications and task priorities for tasks according to some embodiments disclosed in this application;
FIG. 5 is a flowchart of a task scheduling process according to some embodiments disclosed in this application;
FIG. 6 is a flowchart of a scheduling priority adjustment process according to some embodiments disclosed in this application;
FIG. 7 is an example of scheduling priority adjustment according to some embodiments disclosed in this application; and
FIG. 8 is a block diagram of a task scheduling apparatus according to some embodiments disclosed in this application.

**DESCRIPTION OF EMBODIMENTS**

Embodiments disclosed in this application are described in more detail in the following with reference to the accompanying drawings. Although some embodiments disclosed in this application are shown in the accompanying drawings, it should be understood that this disclosure may be implemented in various forms, and should not be construed as being limited to the embodiments described herein. On the contrary, these embodiments are provided so that this application will be thoroughly and completely understood. It should be understood that the accompanying drawings and embodiments disclosed in this application are merely used as examples, but are not intended to limit the protection scope of this application.

In descriptions of embodiments disclosed in this application, the term "include" and similar terms thereof should be understood as open inclusion, that is, "include but are not limited to". The term "based" should be understood as "at least partially based". The terms "one embodiment" or "the embodiment" should be understood as "at least one embodiment". The terms "first", "second", and the like may indicate different or same objects. Other explicit and implicit definitions may also be included below.

Embodiments disclosed in this application may be applied to an electronic device. The electronic device in embodiments disclosed in this application may be a terminal. For example, the terminal may be a portable electronic device, such as a mobile phone, a tablet computer, a wearable device with a wireless communication function (like a smart watch), or a vehicle-mounted device. An example embodiment of a portable electronic device includes but is not limited to a portable electronic device using iOS®, Android®, Microsoft®, or another operating system.

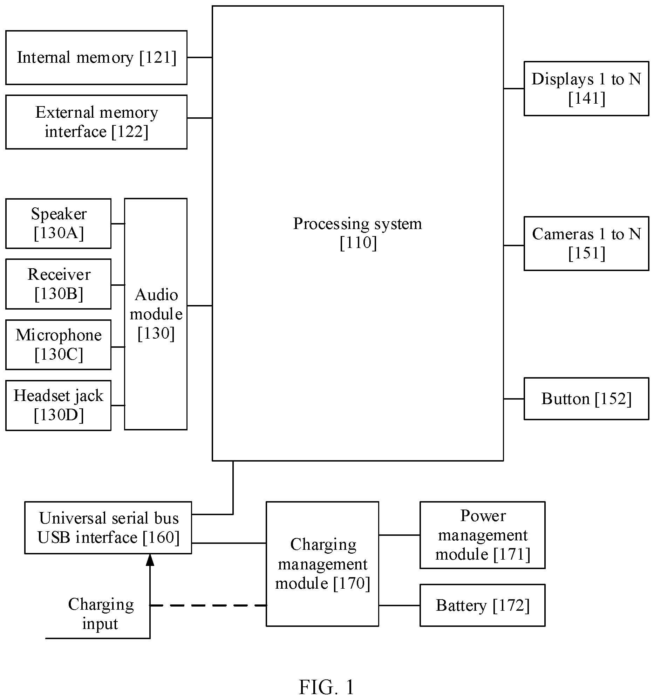

For example, FIG. 1 is a schematic diagram of a hardware structure of an electronic device according to an embodiment disclosed in this application. Specifically, the electronic device 100 may include a processing system 110, an internal memory 121, an external memory interface 122, an audio module 130, a speaker 130A, a receiver 130B, a microphone 130C, a headset jack 130D, a display 141, a camera 151, a button 152, a universal serial bus (universal a serial bus, USB) interface 160, a charging management module 170, a power management module 171, and a battery 172. In other embodiments, the electronic device 100 may further include an indicator. The processing system 110 may include one or more processing units. For example, the processing system 110 may include one or more CPUs, an application processor (application processor, AP), a graphics processing unit (graphics processing unit, GPU), and/or a baseband processor. Different processing units may be independent components, or may be integrated into one or more processors.

Each CPU can be single-core or multi-core. The CPU is a computing and control core of the electronic device, and is mainly configured to process information and run a program. The CPU may include one or more of a large-core CPU (which may alternatively be referred to as a large core for short), a medium-core CPU (which may alternatively be referred to as a medium core for short), or a small-core CPU (which may alternatively be referred to as a small core for short). The large core has a highest processing capability and highest performance, the medium core has a second-highest processing capability and second-highest performance, and the small core has a lowest processing capability and lowest performance.

The CPU is a part of a system on chip (system on chip, SoC). For example, one or more CPUs may form one cluster (cluster). The SoC of the electronic device includes a plurality of clusters, and the plurality of clusters facilitate scheduling of the CPU, to achieve a better energy consumption ratio. Optionally, each cluster includes only a large core, a medium core, or a small core.

In some embodiments, a memory may be further disposed in the processing system 110, and is configured to store instructions and data.

In the example of FIG. 1, the internal memory 121 may be configured to store computer-executable program code. The executable program code includes instructions. The processing system 110 runs the instructions stored in the internal memory 121, to perform various function applications of the electronic device and data processing. The internal memory 121 may include a program storage area and a data storage area. The program storage area may store an operating system, an application required by at least one function (such as a voice playing function or an image collection function), and the like. The data storage area may store data (such as audio data, an address book, and a parameter required for taking a photo) created during use of the electronic device 100, and the like. In addition, the internal memory 121 may include a high-speed random access memory, or may include a nonvolatile memory, for example, at least one magnetic disk storage device, a flash memory, or a universal flash storage (universal flash storage, UFS).

In the example of FIG. 1, the external memory interface 122 may be used to connect to an external memory card (for example, a micro SD card) to extend a storage capability of the electronic device 100.

The electronic device 100 may implement an audio function such as music playing or recording through the audio module 130, the speaker 130A, the receiver 130B, the microphone 130C, the headset jack 130D, the application processor, and the like.

The electronic device 100 may implement a display function through the GPU, the display 141, the application processor, and the like. The GPU is a microprocessor for image processing, and is connected to the display 141 and the application processor. The GPU is configured to perform mathematical and geometric computation, and render an image. The processing system 110 may include one or more GPUs, and the one or more GPUs execute program instructions to generate or change display information.

The display 141 may be configured to display an image, a video, and the like. In some embodiments, the electronic device 100 may include one or N displays 141, where N is a positive integer greater than 1.

The electronic device 100 may further implement a photographing function through the camera 151, the video codec, the GPU, the display 141, the application processor, and the like.

The camera 151 may be configured to capture a static image or a video. An optical image of an object is generated through a lens, and is projected onto the photosensitive element. In some embodiments, the electronic device 100 may include one or N cameras 151, where N is a positive integer greater than 1. The processing system 110 or a processing unit (such as a GPU) included in the processing system 110 may run or execute a software program and/or a module stored in the internal memory 121, and display an image on the display 141.

The button 152 may include a power button, a volume button, and the like. The button 152 may be a mechanical button or a touch button. The electronic device 100 may receive a button input, and generate a button signal input related to user settings and function control of the electronic device 100.

In some embodiments, the processing system 110 may include one or more interfaces. For example, the interface may be a SIM card interface. For another example, the interface may alternatively be a USB interface 160. It can be understood that, in this embodiment disclosed in this application, different modules of the electronic device 100 may be connected through an interface, so that the electronic device 100 can implement different functions, for example, photographing and processing. It should be noted that a connection manner of the interface in the electronic device 100 is not limited in this embodiment disclosed in this application.

The USB interface 160 is an interface that complies with the USB standard specification. For example, the USB interface 160 may include a mini USB interface, a micro USB interface, a USB type C interface, and the like. The USB interface 160 may be configured to connect to a charger to charge the electronic device 100, or may be configured to transmit data between the electronic device 100 and a peripheral device, or may be configured to connect to a headset for playing audio through the headset. The USB interface 160 may be further configured to connect to another electronic device.

The charging management module 170 is configured to receive a charging input from a charger. The charger may be a wireless charger or a wired charger. In some embodiments of wired charging, the charging management module 170 may receive a charging input of a wired charger through the USB interface 160. In some embodiments of wireless charging, the charging management module 170 may receive a wireless charging input through a wireless charging coil of the electronic device 100. The charging management module 170 supplies power to the electronic device 100 through the power management module 171 while charging the battery 172.

The power management module 171 is configured to connect to the battery 172, the charging management module 170, and the processing system 110. The power management module 171 receives an input of the battery 172 and/or the charging management module 170, and supplies power to the processing system 110, the internal memory 121, an external memory 122, the display 141, the camera 151, and the like. The power management module 171 may be further configured to monitor parameters such as a battery capacity, a battery cycle count, and a battery health status (electric leakage or impedance). In some other embodiments, the power management module 171 may alternatively be disposed in the processing system 110. In some other embodiments, the power management module 171 and the charging management module 170 may alternatively be disposed in a same device.

It should be understood that the hardware structure of the electronic device 100 shown in FIG. 1 is merely an example. The electronic device 100 in embodiments disclosed in this application may have more or fewer components than those shown in the figure, two or more components may be combined, or there may be a different component layout. Various components shown in FIG. 1 may be implemented in hardware including one or more signal processing and/or application-specific integrated circuits, software, or a combination of hardware and software.

In addition, it should be understood that the electronic device 100 in embodiments disclosed in this application may implement different functions by installing different application programs (or "applications" for short). The application may be a native (native) application, such as Settings, Phone, or Camera, or may be a third-party application downloaded from an app store, such as WeChat®.

Each application may run by starting one or more tasks, which also known as threads. The electronic device allocates a resource to each task by applying task scheduling, to support task execution. During task scheduling, a scheduler can allocate a resource to a task based on a priority. The priority has a predefined value range. Within this value range, a task with a higher priority can be allocated more resources, such as more CPU running time slices.

During conventional running of an electronic device, when creating a task, an application creates a new task (child thread) from a task (parent thread), and a priority of the newly created task is inherited from the parent thread. Sometimes, the application can set a priority for a task. If a priority of a task is not set, the task is assigned a default priority. However, according to a current mechanism, after a task is assigned a corresponding priority, the priority of the task remains unchanged regardless of whether the application runs in a foreground or in a background. This may cause some problems.

A typical problem is that when an application A runs in the foreground, the application A can set a corresponding priority for a created task. When the application A runs in the background, priorities of various tasks of the application A remain the same. When an application B is switched to run in the foreground, a priority of a task started in the application B may be lower than the priority of the task of the application A that runs in the background. For example, the application B may not set the priority of the task, and therefore the task of the application B is assigned a default priority. Alternatively, even though the application B sets priorities for some tasks, the set priorities may still be lower than priorities of some tasks of the application A. In this case, even if the application B runs in the foreground, the task of the application B has a lower resource preemption capability than that of the application A, and the task of the application B may obtain fewer running time slices than that of the application A. As a result, task scheduling is inappropriate, and user experience is greatly affected. A user usually pays more attention to the foreground application B, but the application B obtains fewer resources than the background application A that the user does not pay more attention to at this time.

According to embodiments disclosed in this application, an improved task scheduling solution is provided. According to the solution, a scheduling priority of one or more tasks of an application is determined in real time based on a running status of the application. The running status of the application is used to determine a target running category of the application. Different running categories have different classification priorities, and applications in different running categories have different importance levels. A target scheduling priority of a target task in the application is determined based on a target classification priority corresponding to a current target running category of the application. Then, a resource of a processing system is scheduled to the target task based on the determined target scheduling priority, for running of the target task.

According to embodiments disclosed in this application, different classification priorities may be determined based on the running status of the application, for example, the application interacts with a user, the application runs in a foreground, or the application runs in a background. A scheduling priority of a single task in the application may be dynamically changed based on a change in a classification priority of the application. In this way, the scheduling priority of the task may always be related to the running status of the application, to avoid problems such as a failure to schedule an appropriate resource to an important task in the foreground, a low processing efficiency, and a long delay that are caused by a priority of a foreground application being lower than a priority of a background application. This greatly improves user experience.

In some embodiments, the task scheduling priority solution may alternatively be implemented in combination with task priority allocation configured in the electronic device. For example, when a task of the application is created, if a corresponding task priority is inherited from a parent thread, set by the application, or configured by default, a scheduling priority of each task may be determined based on both the classification priority and the task priority. In such an embodiment, when the application is in a specific running category, the scheduling priority of the task may be constrained to a priority range associated with the running category. In this way, tasks of applications in different running categories may have specific priorities. In this way, it is ensured that, for the user, a task of an application that has a higher importance level can have a higher scheduling priority.

Example embodiments disclosed in this application are described in detail below with reference to specific embodiments.

During operation of an electronic device, a running status of an application may change depending on an operation of a user and another possible system setting. For example, if the user chooses to start or operate an application, the application runs in a foreground. In some cases, some applications may be switched from the foreground to a background, or may always run in the background. Therefore, in embodiments disclosed in this application, it is proposed that the application is classified into one of a plurality of different running categories based on the running status of the application, and then a scheduling priority of one or more tasks created in the application may be dynamically determined based on the running category of the application. The plurality of running categories may be preset, and different running categories correspond to different running statuses of applications. In some embodiments, the plurality of running categories may be classified based on importance levels of applications in different running statuses. In this way, the importance levels of the applications in different running categories are different. Further, corresponding classification priorities may be separately configured for the plurality of running categories. Flexible and dynamic task scheduling can be performed based on the importance levels of the applications in different running statuses, to improve user experience. In some embodiments, if an importance level of an application in a running category is high, that is, an importance level of the application in a current running status is high, a classification priority corresponding to the running category is configured to be higher than that of a running category having a lower importance level. In this way, an application in a more focused and important running status can be classified into a running category that may have a higher task scheduling level.

In some embodiments, the plurality of preset running categories may include an interaction category, a perception category, a default category, and a background category. Among the four running categories, an application in the interaction category is considered to be an application having a highest importance level, an importance level of an application in the perception category is lower than that of the application in the interaction category, an importance level of an application in the default category is lower than that of the application in the perception category and higher than that of an application in the background category, and the application in the background category has a lowest importance level in the four running categories. Correspondingly, based on the importance level, a classification priority corresponding to the interaction category is the highest, and classification priorities corresponding to the perception category, the default category, and the background category are sequentially lowered. As described in more detail below, if an application has a higher classification priority, it may be determined that a task in the application has a higher scheduling priority, so that the task can have a higher resource preemption capability, and more resources can be scheduled.

Based on such a category classification, an application that a user interacts with and an application with a task that is perceptible by the user may receive resource scheduling at a higher priority. Based on the task scheduling in this embodiment disclosed in this application, when a background load is high, a startup time of an application with a higher importance level can be reduced. In addition, because the application running in the foreground can be ensured to have a higher priority to obtain scheduling, a frame loss rate of the application running in the foreground can also be reduced. Table 1 below summarizes these four types of running categories, and each running category is discussed in more detail below.

**Table 1 Example running categories**

| Running category | Importance level | Description |
|---|---|---|
| Interaction category | ★★★★★ | An application that a user interacts with for a period of time |
| Perception category | ★★★★☆ | An application that runs in a foreground and that a user does not interact with for a long time, or an application having at least one task that is perceptible by the user, such as a visible window, voice playing, and downloading |
| Default category | ★★★☆☆ | An application other than that in the other three categories |
| Background category | ★★☆☆☆ | An application that runs in a background and no task that is perceptible by a user runs in the application |

The interaction category may include an application that runs in the foreground and that the user interacts with for a period of time. For example, the user starts the application by tapping, or the user performs an operation on a user interface of the application, such as tapping and sliding. These running statuses indicate that the application interacts with the user. In some embodiments, if the user operates the application, the application can be considered to be in the interaction category in threshold duration (for example, N ms, where N is a number greater than 0) from a time when the application is operated.

The application in the perception category may include an application that runs in the foreground, but duration since a previous operation performed by the user on the application exceeds the threshold duration (for example, N ms). In some cases, the application runs in the foreground. For example, a user interface of the application is displayed on a display of an electronic device, but the user does not operate the application for a long time. For another example, in an electronic device with a split-screen display function, the user interacts with an application displayed on one display, but does not operate an application displayed on the other display for a long time. Compared with the application in the interaction category, the application in the perception category, which also runs in the foreground, may not be a focus of attention of the user and therefore has a lower importance level. By switching the application that runs in the foreground and that the user does not interact with for a long time from the interaction category to the perception category with a lower classification priority, a task in the foreground application with a high priority can be prevented from occupying more resources for a long time, to avoid occurrence of a high foreground load. Therefore, the application in the interaction category with the highest priority can always be the application that is in the focus of attention of the user.

In addition, as summarized in Table 1, the perception category may also include the application that runs in the background but has at least one task that is perceptible by the user. For example, after some applications are switched to the background, there is still a floating window for displaying content, playing a sound (for example, an audio or music playback application), and/or downloading a file. These tasks are perceptible by the user and important to the user. Therefore, these applications can be classified into the perception category rather than the background category with a lower classification priority. In this way, the tasks of these applications, especially those that are perceptible by the user, can still be scheduled resources with a high priority.

The background category includes an application that runs in the background and does not have a task that is perceptible by the user. Such applications can have a lowest priority.

The default category includes an application other than that in the interaction category, the perception category, and the background category, such as an application that includes a kernel thread. In some implementations, if the application is not in any one of the interaction category, the perception category, and the background category, the application may be classified into the default category.

It should be understood that only example running categories are given above. In other embodiments, more, fewer, or different running categories may alternatively be set. For example, the foregoing single perception category may be further divided into more perception categories, and applications in different perception categories may have perception tasks of different importance levels.

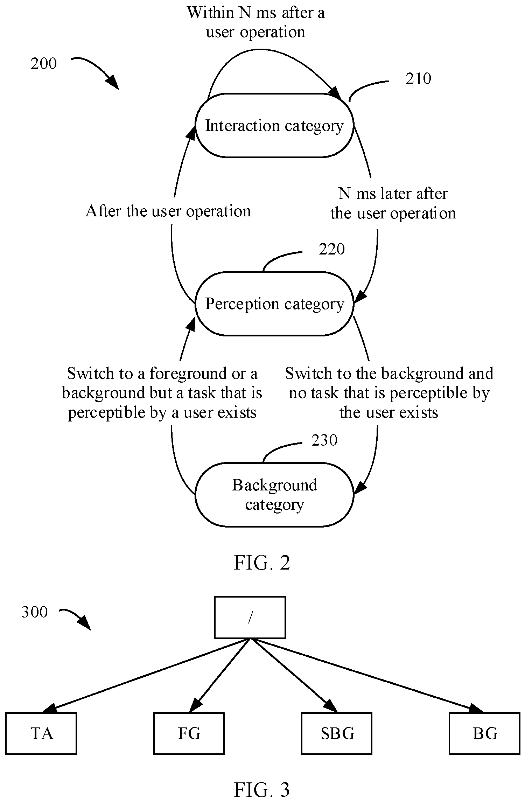

It can be seen from the foregoing description that, as a running status of an application changes, the application may switch between a plurality of running categories. FIG. 2 is an example switching diagram of some running categories according to some embodiments disclosed in this application. The example of FIG. 2 specifically illustrates switching between an interaction category 210, a perception category 220, and a background category 230.

As shown in FIG. 2, if an application is in the perception category 220, after a user operates the application, the application switches to the interaction category 210, and is in the interaction category 210 for threshold duration (N ms). After duration since a previous operation performed by the user exceeds the threshold duration (N ms), the application switches from the interaction category to the perception category 220. At this point, the application may still run in the foreground.

If the application is switched from the foreground to the background for running, and does not have a task that is perceptible by the user being executed, the application switches from the perception category 220 to the background category 230. If the application in the perception category 220 is switched from the foreground to the background for running and a task that is perceptible by the user still runs in the application, the application may remain in the perception category 220. If the application in the background category 230 is switched from the background to the foreground for running, or if the application runs in the background and has one or more tasks that are perceptible by the user, the application may switch from the background category 230 to the perception category.

It should be understood that FIG. 2 is only an example switching diagram for some running categories. There is also some other running category switching that is not shown in the figure. For example, if an application is started by a user, or an application in a default category is operated by a user, the application is in the interaction category 210 for threshold duration (for example, N ms). Although not shown in the figure, the application in the default category may also be reclassified into the background category, the perception category, or the interaction category due to changes in the running status.

The following discusses the classification of running categories of the application and example running categories. Different running categories correspond to different classification priorities. In some embodiments, when a scheduling priority of a task of an application is determined, in addition to a classification priority corresponding to a running category of the application, a task priority set for the task may be further considered. The scheduling priority of a specific task may be determined based on the classification priority corresponding to the application and the task priority of the specific task.

In some embodiments, when an application creates a task, the application may set a priority for the created task. In some embodiments, if a task (child thread) is created from another task (parent thread), the task may inherit a task priority of the another task. In some embodiments, if an application does not actively set a task priority for a task, the task priority may be set to a default value.

Setting of a task priority in an application may depend on a scheduling mechanism used by an operating system of an electronic device (for example, the electronic device 100 in FIG. 1). In some embodiments, the electronic device 100 may perform task scheduling by using, for example, a completely fair scheduler (CFS). The following briefly describes the CFS scheduling mechanism. In some implementations, a task priority is typically determined within a task priority range. For example, a value range of a CFS-based task priority (also referred to as a CFS priority) may be a range of [100, 139], where a smaller value represents a higher task priority. For example, a task priority of 101 is higher than a task priority of 131.

In some embodiments, when the scheduling priority of the task is determined, the classification priority corresponding to the application may be used as a basic value, and an incremental value is determined based on the task priority of each task of the application, and is added to the basic value corresponding to the classification priority.

In some embodiments, priority ranges associated with different running categories may be set to restrict values of scheduling priorities of tasks of applications in different running categories. In other words, if an application is in a running category, scheduling priorities of various tasks of the application fall within a priority range associated with the running category. A smaller value of the priority may be set to indicate a higher priority level, or a larger value may be set to indicate a higher priority level. In this specification, that a smaller value indicates a higher priority is used as an example for discussion. However, it can be understood that a reverse value rule is also applicable.

When setting a priority range that constraints scheduling priorities, running categories with higher importance levels are associated with priority ranges with higher priorities, and running categories with lower importance levels are associated with priority ranges with lower priorities. For example, if an importance level of a first running category (for example, interaction category) is higher than an importance level of a second running category (for example, awareness category), a priority in a priority range associated with the first running category is higher than a priority in a priority range associated with the second running category. For example, a value of a priority in the priority range associated with the first running category is less than a value of a priority in the priority range associated with the second running category. This ensures that a task of a more important application has a higher scheduling priority and a task of a less important application has a lower scheduling priority.

By setting the priority range, the determined scheduling priority falls within the priority range associated with the running category by adding the incremental value determined based on the task priority of each task to the basic value corresponding to the classification priority. In other words, task priorities may be used to differentiate scheduling priorities of different tasks of applications in each running category within a priority range. Table 2 below shows examples of classification priorities, incremental priorities, and final priority ranges for running categories.

**Table 2 Classification priority, incremental priority, and final priority range for running categories**

| Running category | Classification level | Classification priority | Incremental priority | Value range of priority range |
|---|---|---|---|---|
| Interaction category | 0 | 0 | (cfs_priority-100)/4 | 0-9 |
| Perception category | 1 | 10 | (cfs_priority-100)/4 | 10-19 |
| Default category | 2 | 20 | (cfs_priority-100)/4 | 20-29 |
| Background category | 3 | 30 | (cfs_priority-100)/4 | 30-39 |

In Table 2, it is assumed that there are 10 priority differences between classification priorities corresponding to the running categories. For example, a classification priority corresponding to the interaction category is 0, a classification priority corresponding to the perception category is 10, a classification priority corresponding to the default category is 20, and a classification priority corresponding to the background category is 30. The priority range associated with each running category has 10 scheduling priorities, so that a scheduling priority of a task of an application in the running category values from the associated priority range.

In Table 2, the incremental priority is an incremental value determined based on the task priority (represented as cfs_priority in Table 2) of the task. It is assumed that a value range of the task priority is [100, 139]. To make the final scheduling priority fall within the set priority range, the incremental priority is determined according to a formula "(cfs_priority-100)/4".

Based on the example in Table 2, a scheduling priority of a task of an application may be determined as follows:

$$Sche\_prio = class\_level * 10 + (cfs\_priority - 100)/4 \quad (1)$$

In the foregoing formula (1), Sche_prio represents a scheduling priority of a task, class_level represents a running category of an application in which the task is located, for example, running categories 0 to 3 in Table 2, and class_level* 10 represents a classification priority corresponding to the running category. According to the foregoing formula (1), for an application and a task in the application, after the classification priority corresponding to the running category of the application is determined, the scheduling priority is determined based on the task priority of the task on the basis of the classification priority, and the scheduling priority falls within the priority range corresponding to the classification priority.

In the foregoing example, for all running categories, the value range of the scheduling priority is 0 to 39, and there are 40 possible values in total. A smaller value indicates a higher scheduling priority. It should be understood that the foregoing is a specific example of the value of the scheduling priority. In an actual application, another valuing manner may be used for the scheduling priority based on a requirement. This aspect is not limited in embodiments disclosed in this application.

After determining the scheduling priority, the electronic device may schedule a resource of a processing system to the task based on the scheduling priority, to run the task. Generally, a task with a higher scheduling priority can be scheduled more resources for processing. The resource herein may refer to a processing system, for example, an occupied time length or an occupied time proportion on a CPU. This aspect is not limited in embodiments disclosed in this application.

In the foregoing description, the CFS scheduler is used as an example to describe the task priority. The scheduling priority determining provided in embodiments disclosed in this application may be compatible with various task scheduling mechanisms, including a scheduling mechanism of the CFS scheduler, and is used to influence task scheduling by the CFS scheduler.

CFS is short for completely fair scheduler. CFS is designed to achieve an ideal, accurate, multitasking CPU on real hardware. The CFS scheduler schedules a resource to a task by allocating a percentage of CPU usage time. For example, if two tasks with a same priority run on a same CPU, each task is allocated 50% of CPU running time to achieve fairness.

The foregoing example is based on a same priority. In some cases, if some tasks have higher priorities and some tasks have lower priorities, the CFS scheduler may allocate more resources to the higher-priority tasks based on the priorities.

In actual implementation, the CFS measures which task is most worthy of being scheduled based on a virtual running time (vruntime) of each task. A ready queue in CFS is a red-black tree with vruntime as a key value. A task with a smaller virtual time is closer to a leftmost end of the entire red-black tree. Therefore, the scheduler selects, at each time, a task that is located at the leftmost end of the red-black tree, and vruntime of the task is the smallest. In some implementations, each priority has a weight. The CPU time can be allocated to each task based on a weight ratio. For example, for a task A and a task B, if a weight of A is 1024, and a weight of B is 2048, a ratio of CPU time obtained by A is 1024/(1024+2048)=33.3%, and a ratio of CPU time obtained by the task B is 2048/(1024+2048)=66.7%. That is, a larger weight indicates a larger proportion of allocated time, which is equivalent to a higher priority. After the weight is introduced, the time allocated to the task is calculated as follows:

**Time allocated to a task = total CPU time * task weight/sum of all task weights in a ready queue (runqueue)**

In some implementations, the CFS scheduler proposes a concept of a nice value for the priority, and nice values and weights are in one-to-one correspondence. The nice value is a specific number, with a value range of [-20, 19]. A smaller value indicates a higher priority and a larger weight. The nice value and weight can be converted to each other. In conventional scheduling of the CFS-based task priority, a mapping table between a nice value and a weight (such as Table 3) is provided in an electronic device, for example, in a core of an electronic device.

**Table 3 Conventional mapping table between a nice value and a weight**

| const int sched_prio_to_weight[40] = { | | | | | |
|---|---|---|---|---|---|
| /* -20 */ | 88761, | 71755, | 56483, | 46273, | 36291, |
| /* -15 */ | 29154, | 23254, | 18705, | 14949, | 11916, |
| /* -10 */ | 9548, | 7620, | 6100, | 4904, | 3906, |
| /* -5 */ | 3121, | 2501, | 1991, | 1586, | 1277, |
| /* 0 */ | 1024, | 820, | 655, | 526, | 423, |
| /* 5 */ | 335, | 272, | 215, | 172, | 137, |
| /* 10 */ | 110, | 87, | 70, | 56, | 45, |
| /* 15 */ | 36, | 29, | 23, | 18, | 15, |
| }; | | | | | |

In Table 3, sched_prio_to_weight indicates a weight converted from a nice value, and a value range of the nice value is [-20, 19]. Values of the weight array can be calculated by using the following formula: weight=$1024/1.25^{nice}$. The value of 1.25 is calculated based on the following rule: Each time the nice value of the task decreases, the task obtains 10% more CPU time. In the formula, a weight of 1024 is used as a reference value. The weight of 1024 corresponds to a nice value 0, and the weight is referred to as NICE_0_LOAD. By default, weights of most tasks are basically NICE 0 LOAD.

In Table 3, when a nice value is -20, a weight value is 88761. When a nice value is -19, a weight value is 71755. The rest can be deduced by analogy. When a nice value is 0, a weight value is 1024. When a nice value is 15, a weight value is 36. When a nice value is 19, a weight value is 15.

In this embodiment disclosed in this application, based on a task priority, for example, a CFS priority, priority allocation of a task is improved, and a scheduling priority is further determined. Based on the scheduling priority, the CFS scheduler may also determine the virtual running time (vruntime) of each task based on the scheduling priority, to measure which task is most worthy of being scheduled. In some embodiments, each scheduling priority may also have a weight. The CPU time can be allocated to each task based on a weight ratio.

In some embodiments, a weight of each scheduling priority may continue to use the correspondence between nice values and weights that is set in Table 3. For example, scheduling priorities in the range [0, 39] may be in a one-to-one correspondence with nice values in the range [-20, 19]. Therefore, a corresponding weight may be determined by using the mapping table in Table 3.

In some embodiments, because a weight difference in the CFS may be large, a conversion relationship between a scheduling priority and a weight may be further redefined. In some embodiment, a time slice difference between every two adjacent running categories may be defined to be about 4 times, and each running category has 10 priorities (in the example of table 2), so that a ratio between the two adjacent scheduling priorities is defined as 10th root of 4, which is about 1.15. In this way, the conversion relationship between the scheduling priority and the weight may be as follows:

**Table 4 Table of predefined mapping between a scheduling priority and a weight in an embodiment disclosed in this application**

| const int sched_prio_toweight[40] = { | | | | | |
|---|---|---|---|---|---|
| /* | 0 */ | 23292, | 20254, | 17612, | 15315, | 13318, |
| /* | 5 */ | 11580, | 10070, | 8757, | 7614, | 6621, |
| /* | 10 */ | 5758, | 5007, | 4354, | 3786, | 3292, |
| /* | 15 */ | 2863, | 2489, | 2164, | 1882, | 1637, |
| /* | 20 */ | 1423, | 1238, | 1076, | 936, | 814, |
| /* | 25 */ | 708, | 615, | 535, | 465, | 405, |
| /* | 30 */ | 352, | 306, | 266, | 231, | 201, |
| /* | 35 */ | 175, | 152, | 132, | 115, | 100 |
| }; | | | | | |

In Table 4, sched_prio to weight indicates a weight converted from a scheduling priority, and a value range of the scheduling priority is [0, 39]. In Table 4, if a scheduling priority is 0, a weight is 23292. If a scheduling priority is 1, a weight is 20254. A ratio of the weight corresponding to scheduling priority of 0 to the weight corresponding to scheduling priority of 1 is about 1.15. By analogy, if a scheduling priority is 35, a weight is 175. If a scheduling priority is 39, a weight is 100.

Based on the weight corresponding to the scheduling priority, time allocated to a task may be determined by using the foregoing formula: **Time allocated to a task = total CPU time * task weight/sum of all task weights in a ready queue (runqueue).**

It should be understood that the foregoing Table 4 shows only a specific example of conversion between a scheduling priority and a weight. In another implementation, another weight conversion manner may be further defined. For example, a time slice difference between two running categories may not be four times, or each running category may not have 10 priorities. This affects weight conversion. This aspect is not limited in embodiments disclosed in this application.

In some embodiments disclosed in this application, task scheduling may be alternatively based on another scheduling solution in the electronic device, especially an operating system of the electronic device. For example, in some embodiments, the operating system of the electronic device classifies tasks into different CGroups. Common CGroups include top-app (foreground application that obtains focus, TA for short), foreground (foreground perceptible group, FG for short), system-background (system background, SB for short), and background (background, BG for short).

CGroup is short for control group, and is a task aggregation and allocation mechanism provided by some operating systems (such as Linux). CGroup can limit, record, and isolate resources (such as CPU, memory, and I/O) used by process groups (process groups). CGroup is also a resource management method used to implement virtualization. CGroup is a basic structure that provides a function and an interface for grouping processes. Specific resource management functions such as I/O and memory allocation control are implemented through this function. These specific resource management functions are called CGroup subsystems (subsystems).

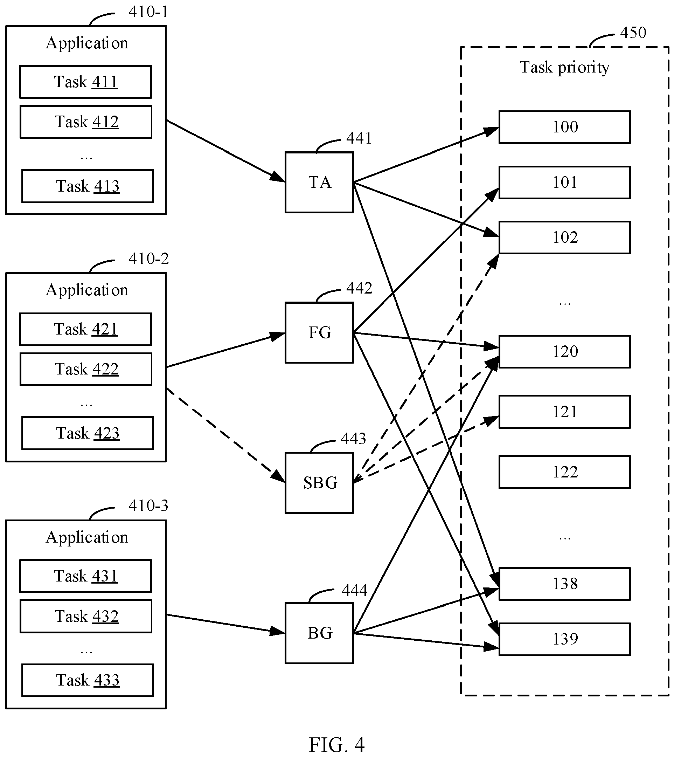

FIG. 4 is an example mapping of CGroup allocation for applications and task priorities for tasks according to some embodiments disclosed in this application. In FIG. 4, an application 410-1, an application 410-2, and an application 410-3 are schematically shown. The application 410-1 creates a task 411, a task 412, a task 413, and the like. The application 420 creates a task 421, a task 422, a task 423, and the like. The application 410-3 creates a task 431, a task 432, a task 433, and the like. Certainly, quantities of these applications and tasks are just an example. Tasks in each application may be allocated to corresponding CGroups, for example, TA 441, FG 442, SBG 443, and BG 444. For example, the tasks in the application 410-1 are allocated to TA 441, the tasks in the application 410-2 are allocated to FG 442 or SBG 443, and the tasks in the application 410-3 are allocated to BG 444. In addition, each task in the application is further configured with a task priority of 450 within a value range of [100, 139].

A hierarchy (hierarchy) can be considered as a set of CGroups. A hierarchy is a root of the set. A hierarchy can be regarded as a CGroup tree. Each node in the tree is a process group. Each tree is associated with zero or more subsystems. FIG. 3 is an example of a CGroup tree according to some embodiments disclosed in this application. This example shows a CGroup tree 300 consisting of TA, FG, SBG, and BG.

A subsystem is a kernel module that can be added or deleted in a CGroup, and encapsulates resources, such as memory resources, CPU resources, and network resources, in the CGroup. A subsystem can be associated with a CGroup tree. After being associated with the CGroup tree, the subsystem performs a specific operation on each node (process group) in the tree. The subsystem, also often referred to as a resource controller, is used to schedule or limit resources of each process group. Example subsystems that are currently strongly related to process scheduling are as follows:

**Table 5 List of example subsystems**

| Subsystem name | Function |
|---|---|
| cpuset | Binding a CGroup to a specific CPU |
| CPU | Restricting CPU usage of a CGroup |
| cpuacct | Collecting statistics on CPU usage of a CGroup. |
| schedtune | CPU selection and boost triggering |

The scheduling priority determining provided in embodiments disclosed in this application may be applied to each subsystem. This aspect is not limited in embodiments disclosed in this application.

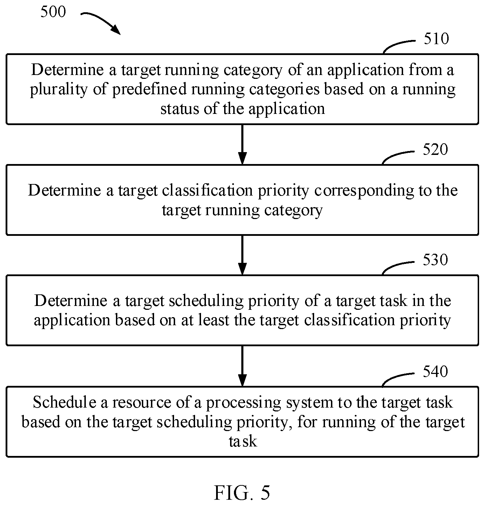

FIG. 5 is a flowchart of a task scheduling process 500 according to some embodiments disclosed in this application. The process 500 may be implemented, for example, in the electronic device 100 of FIG. 1. For ease of description, the process 500 may be described below with reference to FIG. 1.

In block 510, the electronic device 100 determines a target running category of an application from a plurality of predefined running categories based on a running status of the application. The application may be a native application in the electronic device 100 or an application later installed in the electronic device 100. The "target" running category refers to a running category determined for the application currently under consideration. The target running category may be selected from a plurality of predefined running categories, such as the interaction category, the perception category, the default category, or the background category discussed above.

Applications in different running categories in the plurality of predefined running categories have different importance levels. In some embodiments, an importance level of the perception category is lower than that of the interaction category, an importance level of the default category is lower than that of the awareness category, and an importance level of the background category is lower than that of the default category.

In some embodiments, if the application runs in a foreground and duration since a previous operation performed by a user on the application is less than threshold duration, it is determined that the application is in the interaction category. In some embodiments, if the application is in the interaction category and the duration since the previous operation performed by the user on the application exceeds the threshold duration, it is determined to switch the application from the interaction category to the perception category. In some embodiments, if the application is switched to run in a background and no task that is perceptible by the user runs in the application, it is determined that the application is in the background category. In some embodiments, if the application is switched to run in the foreground or the application runs in the background and has at least one task that is perceptible by the user, it is determined that the application is in the perception category. In some embodiments, if the application is not in any one of the interaction category, the perception category, and the background category, it is determined that the application is in the default category.

In block 520, the electronic device 100 determines a target classification priority corresponding to the target running category. As discussed above, each running category may have a corresponding classification priority.

In some embodiments, a plurality of running categories respectively correspond to a plurality of classification priorities. If an importance level of an application in a first running category in the plurality of running categories is greater than that of an application in a second running category in the plurality of running categories, a classification priority corresponding to the first running category is higher than a classification priority corresponding to the second running category.

In some embodiments, a classification priority corresponding to the interaction category is higher than a classification priority corresponding to the perception category; the classification priority corresponding to the perception category is higher than a classification priority corresponding to the default category; and the classification priority corresponding to the default category is higher than a classification priority corresponding to the background category.

In block 530, the electronic device 100 determines a target scheduling priority of a target task in the application based on at least the target classification priority.

In some embodiments, if the target running category is a first running category in the plurality of running categories, the target scheduling priority falls within a first priority range associated with the first running category. If an importance level of the first running category is greater than that of a second running category in the plurality of running categories, a priority within the first priority range is higher than a priority within a second priority range associated with the second running category.

In some embodiments, a value range of the target scheduling priority falls within a priority range corresponding to the target running category. In some embodiments, if the target running category is the interaction category, the target scheduling priority falls within the first priority range. If the target operating category is the perception category, the target scheduling priority falls within the second priority range. A priority in the second priority range is lower than a priority in a first priority range. In some embodiments, if the target running category is the default category, the target scheduling priority falls within a third priority range, and a priority in the third priority range is lower than a priority in a second priority range. In some embodiments, if the target running category is the background category, the target scheduling priority falls within a fourth priority range, and a priority in the fourth priority range is lower than a priority in a third priority range.

In block 540, the electronic device 100 schedules a resource of a processing system to the target task based on the target scheduling priority, for running of the target task.

In some embodiments, when determining the target scheduling priority, the electronic device 100 may further determine a target task priority that is set for the target task, and determine the target scheduling priority of the target task based on the target task priority and the target classification priority.

In some embodiments, the electronic device 100 may determine, from a predefined mapping table (for example, Table 4) between a scheduling priority and a weight, a target weight corresponding to the target scheduling priority, and allocate the resource of the processing system to the target task based on a sum of the target weight and a weight of a task in a ready queue.

In some embodiments disclosed in this application, a low-priority task compensation mechanism is further provided. Because a low-priority task has a low weight, less time slices are obtained by the low-priority task, and a case in which the low-priority task cannot be scheduled for a long time and is always in a runnable (runnable) state may exist. To alleviate a "starvation" situation of such a task, the low-priority task compensation mechanism may be implemented. This mechanism can be implemented by adjusting scheduling priorities of tasks.

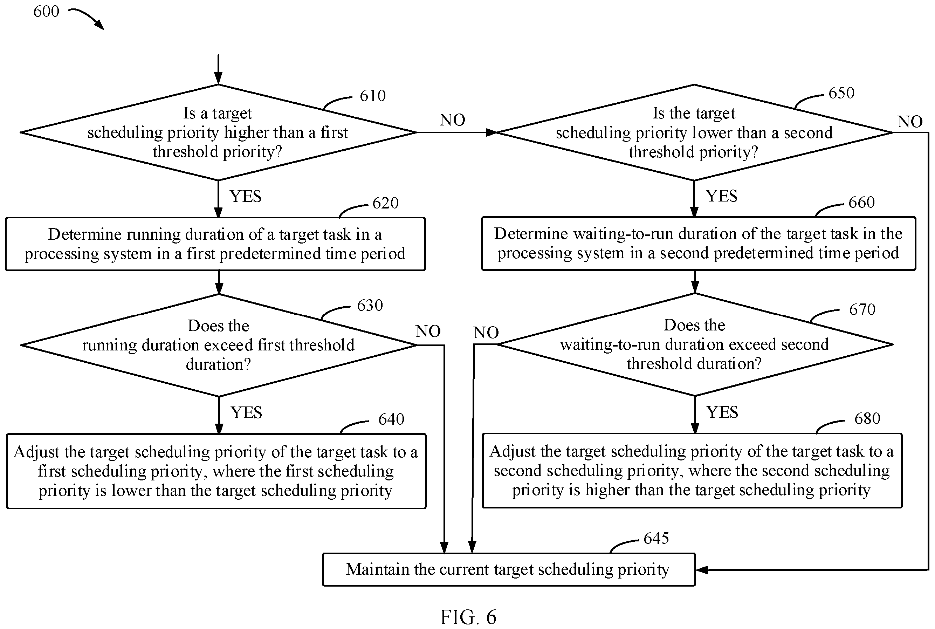

FIG. 6 is a flowchart of a scheduling priority adjustment process 600 according to some embodiments disclosed in this application. The process 600 may be implemented, for example, in the electronic device 100 of FIG. 1. For ease of description, the process 600 may be described below with reference to FIG. 1.

In block 610, the electronic device 100 determines whether a scheduling priority is higher than a first threshold priority. The first threshold priority can be set as required. For example, the first threshold priority may be set so that all or some scheduling priorities associated with the interaction category are higher than the threshold priority.

If the scheduling priority is higher than the first threshold priority, in block 620, the electronic device 100 determines running duration of a target task in a processing system in a first predefined time period. The running duration refers to duration in which a task obtains a processing resource to run. If resources of a plurality of CPU cores can be scheduled to the task, statistics on the running duration of the plurality of CPU cores can be collected.

The first predefined time period may be set based on actual application. This aspect is not limited in embodiments disclosed in this application.

In block 630, the electronic device 100 determines whether the running duration of the target task exceeds first threshold duration (for example, N1 ms, where N1 is a number greater than 0). The first threshold duration may be set based on an actual application, and is not limited herein.

If the running duration exceeds the first threshold duration, in block 640, the electronic device 100 adjusts a target scheduling priority of the target task to a first scheduling priority, where the first scheduling priority is lower than the target scheduling priority. In other words, if a task with a higher scheduling priority is scheduled and occupies a resource for a long time, the scheduling priority of the task may be lowered, so that a task with a lower scheduling priority may obtain a scheduling opportunity. A reduction magnitude of the target scheduling priority may be preconfigured, for example, may be reducing by two levels, or may be another value. This aspect is not limited in embodiments disclosed in this application.

The electronic device 100 may schedule the resource to the target task based on the adjusted first scheduling priority, for subsequent running of the target task.

If the running duration does not exceed the first threshold duration, in block 645, the electronic device 100 may maintain the current target scheduling priority of the target task.

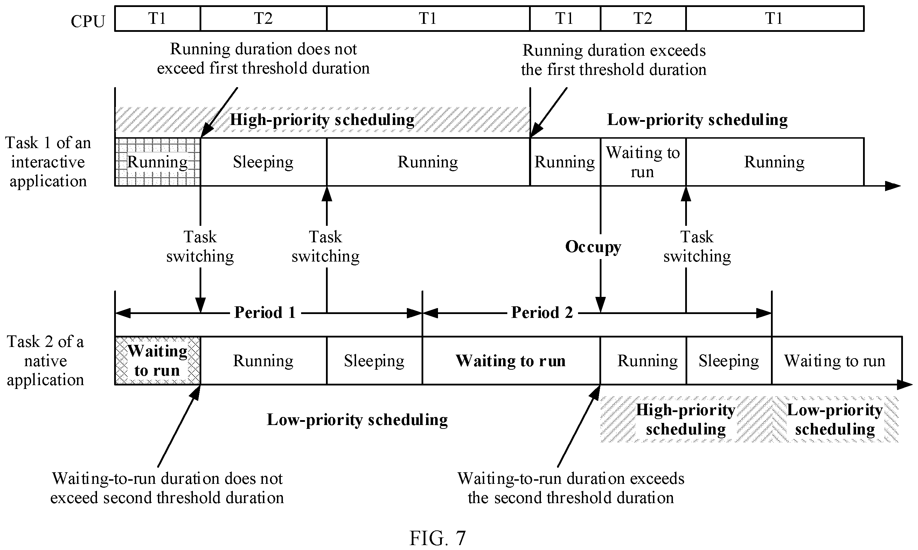

FIG. 7 is an example of scheduling priority adjustment according to some embodiments disclosed in this application. In the example of FIG. 7, an example in which a task 1 of an interactive application and a task 2 of a native application are run is used for description, and a CPU is a single core. The task 1 has a higher scheduling priority, and the task 2 has a lower scheduling priority.

As shown in FIG. 7, the task 1 is first scheduled to run in a period 1, but in this case, running duration does not exceed first threshold duration (N1 ms), and the scheduling priority of the task 1 remains unchanged. The task 1 then enters a sleep mode. During the running of the task 1, the task 2 is in a waiting-to-run mode. When the task 1 is in the sleep mode, the CPU can switch to run the task 2. When the task 1 is runnable again, the CPU switches from running the task 2 to running the task 1. After the task 1 runs, running duration of the task 1 in a time period reaches the first threshold duration. In this case, the scheduling priority of the task 1 is lowered. Before the scheduling priority of the task 1 is lowered, the task 1 is scheduled first because of the high scheduling priority of the task 1. After the scheduling priority of the task 1 is lowered, the task 1 is scheduled at a low priority, and subsequent running resources of the task 1 are determined based on a lowered scheduling priority.

In some embodiments, if it is determined in block 610 that the target scheduling priority of the target task is low, for example, lower than the first threshold priority, the electronic device 100 determines in block 650 whether the target scheduling priority is lower than the second threshold priority. In this way, the electronic device 100 may use a compensation mechanism for the target task with the low scheduling priority.

The second threshold priority can be set as required. In some embodiments, the second threshold priority may be set to be the same as the first threshold priority. This means that if the target scheduling priority is lower than the first threshold priority, block 650 may be omitted and block 610 proceeds directly to block 660. In some embodiments, the second threshold priority may be set lower than the first threshold priority. In this way, for a task whose scheduling priority is between the first threshold priority and the second threshold priority, the scheduling priority does not need to be adjusted. An adjustment mechanism is adopted only for extremely high or low scheduling priorities.

In block 660, if the target scheduling priority is lower than the second threshold priority, the electronic device 100 determines waiting-to-run duration of the target task in the processing system in a second predefined time period. The waiting-to-run duration refers to duration in which a task needs to wait to be executed because no resource is scheduled. If resources of a plurality of CPU cores can be scheduled to the task, statistics on the waiting-to-run duration of the plurality of CPU cores can be collected.

The second predefined time period may be set based on an actual application. In some embodiments, the second predefined time period may be equal to or different from the first predefined time period. This aspect is not limited in embodiments disclosed in this application. In block 670, the electronic device 100 determines whether the waiting-to-run duration exceeds second threshold duration (for example, N2 ms, where N2 is a number greater than 0). The second threshold duration may be set based on an actual application, and is not limited herein.

In block 680, if the waiting-to-run duration exceeds the second threshold duration, the electronic device 100 adjusts the target scheduling priority of the target task to a second scheduling priority, where the second scheduling priority is higher than the target scheduling priority. An increase magnitude of the target scheduling priority may be preconfigured, for example, may be increasing by two levels, or may be another value. This aspect is not limited in embodiments disclosed in this application. The electronic device 100 may schedule the resource of the processing system to the target task based on the adjusted second scheduling priority, for subsequent running of the target task.

If the waiting-to-run duration does not exceed the second threshold duration, in block 645, the electronic device 100 may maintain the current target scheduling priority of the target task.

Still refer to the example in FIG. 7. If the waiting-to-run duration of the task 2 does not reach the second threshold duration after a first waiting-to-run period in the period 1, the electronic device 100 maintains the current scheduling priority of the task 2. However, after a second waiting-to-run period expires, the waiting-to-run duration of the task 2 exceeds the second threshold duration. In this case, the scheduling priority of the task 2 is increased. Before the scheduling priority of the task 2 is increased, the task 2 is scheduled at a low priority because of the lower scheduling priority of the task 2. After the scheduling priority of the task 2 is increased, the task 2 is preferentially scheduled, and subsequent running resources of the task 2 are determined based on an increased scheduling priority. For example, after the scheduling priority of the task 2 is increased, as shown in FIG. 7, the scheduling priority of the task 2 is higher than the scheduling priority of the task 1, so that a resource of the CPU is preempted by the task 2 for running. In this case, the task 1 enters a waiting-to-run mode. After the task 2 is executed, the task 2 enters a sleep mode. In this case, the CPU switches from running the task 2 to running the task 1.

In some embodiments, scheduling of a task may be dynamically adjusted continuously based on a current scheduling priority (or a currently adjusted scheduling priority) of the task. In this way, low-priority tasks can be prevented from waiting for a long time because these tasks cannot always preempt resources.

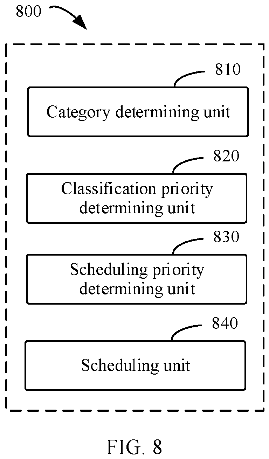

FIG. 8 is a schematic block diagram of a task scheduling apparatus 800 according to some embodiments disclosed in this application. The apparatus 800 may be implemented or included in the electronic device 10 of FIG. 1.

The apparatus 800 may include a plurality of modules for performing corresponding steps in the processes discussed in FIG. 5 and FIG. 6. As shown in FIG. 8, the apparatus 800 includes: a category determining unit 810, configured to determine a target running category that an application is in based on a running status of the application, and a classification priority determining unit 820, configured to determine a target classification priority corresponding to the target running category from a plurality of predefined running categories. Applications in different running categories in the plurality of predefined running categories have different importance levels. The apparatus 800 further includes a scheduling priority determining unit 830, configured to determine a target scheduling priority of a target task in the application based on at least the target classification priority. The apparatus 800 further includes a scheduling unit 840, configured to schedule a resource of a processing system to the target task based on the target scheduling priority, for running of the target task.

In some embodiments, the scheduling priority determining unit 830 is further configured to determine a target task priority that is set for the target task, and determine the target scheduling priority of the target task based on the target task priority and the target classification priority.

In some embodiments, the target running category is selected from the plurality of predefined running categories, and applications in different running categories in the plurality of predefined running categories have different importance levels.

In some embodiments, a plurality of running categories respectively correspond to a plurality of classification priorities. In some embodiments, if an importance level of an application in a first running category in the plurality of running categories is greater than that of an application in a second running category in the plurality of running categories, a classification priority corresponding to the first running category is higher than a classification priority corresponding to the second running category.

In some embodiments, if the target running category is a first running category in the plurality of running categories, the target scheduling priority falls within a first priority range associated with the first running category. In some embodiments, if an importance level of the first running category is greater than that of a second running category in the plurality of running categories, a priority within the first priority range is higher than a priority within a second priority range associated with the second running category.

In some embodiments, the plurality of predefined running categories include at least an interaction category; a perception category, where an importance level of the perception category is lower than that of the interaction category; a default category, where an importance level of the default category is lower than that of the perception category; and a background category, where an importance level of the background category is lower than that of the default category.

In some embodiments, the category determining unit 810 is configured to: if the application runs in a foreground and duration since a previous operation performed by the user on the application is less than threshold duration, determine that the application is in the interaction category; if the application is in the interaction category and the duration since the previous operation performed by the user on the application exceeds the threshold duration, determine to switch the application from the interaction category to the perception category; if the application is switched to run in a background and no task that is perceptible by the user runs in the application, determine that the application is in the background category; if the application is switched to run in the foreground or the application runs in the background and has at least one task that is perceptible by the user, determine that the application is in the perception category; and if the application is not in any one of the interaction category, the perception category, and the background category, determine that the application is in the default category.

In some embodiments, a classification priority corresponding to the interaction category is higher than a classification priority corresponding to the perception category; the classification priority corresponding to the perception category is higher than a classification priority corresponding to the default category; and the classification priority corresponding to the default category is higher than a classification priority corresponding to the background category.

In some embodiments, if the target running category is the interaction category, the target scheduling priority falls within a first priority range; if the target running category is the perception category, the target scheduling priority falls within a second priority range, and a priority in the second priority range is lower than a priority in a first priority range; if the target running category is the default category, the target scheduling priority falls within a third priority range, and a priority in the third priority range is lower than a priority in a second priority range; or if the target running category is the background category, the target scheduling priority falls within a fourth priority range, and a priority in the fourth priority range is lower than a priority in a third priority range.

In some embodiments, the scheduling unit 840 is configured to: determine, from a predefined mapping table between a scheduling priority and a weight, a target weight corresponding to the target scheduling priority; and allocate the resource of the processing system to the target task based on a sum of the target weight and a weight of a task in a ready queue.

In some embodiments, the apparatus 800 further includes: a first duration determining unit, configured to: if the target scheduling priority is higher than a first threshold priority, determine running duration of the target task in the processing system in a first predefined time period; a first priority adjustment unit, configured to: if the running duration exceeds first threshold duration, adjust the target scheduling priority of the target task to a first scheduling priority, where the first scheduling priority is lower than the target scheduling priority; and a second scheduling unit, configured to schedule the resource of the processing system to the target task based on the adjusted first scheduling priority, for subsequent running of the target task.

In some embodiments, the apparatus 800 further includes: a second duration determining unit, configured to: if the target scheduling priority is lower than a second threshold priority, determine waiting-to-run duration of the target task in the processing system in a second predefined time period; a second priority adjustment unit, configured to: if the waiting-to-run duration exceeds second threshold duration, adjust the target scheduling priority of the target task to a second scheduling priority, where the second scheduling priority is higher than the target scheduling priority; and a third scheduling unit, configured to schedule the resource of the processing system to the target task based on the adjusted second scheduling priority, for subsequent running of the target task.

Program code for implementing the methods disclosed in this application may be written in any combination of one or more programming languages. The program code may be provided to a processor or controller of a general-purpose computer, a dedicated computer, or another programmable data processing apparatus, so that when the program code is executed by the processor or the controller, functions/operations specified in the flowcharts and/or block diagrams are implemented. The program code may be executed entirely on a machine, partially on a machine, partially on a machine and partially on a remote machine as a standalone software package, or completely on a remote machine or a server.

In the context of this application, a machine-readable medium or computer-readable medium may be a tangible medium that may contain or store programs for use by an instruction execution system, apparatus, or device or used in combination with an instruction execution system, apparatus, or device. The computer-readable medium may be a machine-readable signal medium or a machine-readable storage medium. The computer-readable medium may include but is not limited to an electronic, magnetic, optical, electromagnetic, infrared, or semiconductor system, apparatus, or device, or any suitable combination thereof. More specific examples of the machine-readable storage medium may include an electrical connection with one or more wires, a portable computer disk, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination thereof.

Further, while the operations are depicted in a particular order, this should be understood to require that such operations be performed in the particular order shown or in a sequential order, or that all of the operations illustrated should be performed to achieve desired results. In a specific circumstance, multitasking and parallel processing may be advantageous. Similarly, while several specific implementation details are included in the above discussion, these should not be construed as a limitation on this application. Specific features described in the context of separate embodiments may also be implemented in combination in a single implementation. Conversely, various features described in the context of a single implementation may also be implemented in a plurality of implementations individually or in any suitable sub-combination.

Although the subject matter has been described in language specific to structural features and/or methodological acts, it should be understood that the subject matter defined in the appended claims is not necessarily limited to the specific features or acts described above. On the contrary, the specific features and acts described above are merely example forms of implementing the claims.

**Claims**

1. A task scheduling method, comprising:

   determining a target running category of an application from a plurality of predefined running categories based on a running status of the application, wherein applications in different running categories in the plurality of predefined running categories have different importance levels;
   determining a target classification priority corresponding to the target running category;
   determining a target scheduling priority of a target task in the application based on at least the target classification priority; and
   scheduling a resource of a processing system to the target task based on the target scheduling priority, for running of the target task.

2. The method according to claim 1, wherein the determining a target scheduling priority of a target task in the application comprises:

   determining a target task priority that is set for the target task; and
   determining the target scheduling priority of the target task based on the target task priority and the target classification priority.

3. The method according to claim 1, wherein the plurality of running categories respectively correspond to a plurality of classification priorities; and
   if an importance level of an application in a first running category in the plurality of running categories is greater than that of an application in a second running category in the plurality of running categories, a classification priority corresponding to the first running category is higher than a classification priority corresponding to the second running category.

4. The method according to claim 1, wherein

   if the target running category is a first running category in the plurality of running categories, the target scheduling priority falls within a first priority range associated with the first running category; and

if an importance level of the first running category is greater than that of a second running category in the plurality of running categories, a priority within the first priority range is higher than a priority within a second priority range associated with the second running category.

5. The method according to claim 1, wherein the plurality of predefined running categories comprise at least:

an interaction category;
a perception category, wherein an importance level of the perception category is lower than that of the interaction category;
a default category, wherein an importance level of the default category is lower than that of the perception category; and
a background category, wherein an importance level of the background category is lower than that of the default category.

6. The method according to claim 5, wherein the determining a target running category of the application comprises:

if the application runs in a foreground and duration since a previous operation performed by a user on the application is less than threshold duration, determining that the application is in the interaction category;
if the application is in the interaction category and the duration since the previous operation performed by the user on the application exceeds the threshold duration, determining to switch the application from the interaction category to the perception category;
if the application is switched to run in a background and no task that is perceptible by the user runs in the application, determining that the application is in the background category;
if the application is switched to run in the foreground or the application runs in the background and has at least one task that is perceptible by the user, determining that the application is in the perception category; and
if the application is not in any one of the interaction category, the perception category, and the background category, determining that the application is in the default category.

7. The method according to claim 5, wherein

a classification priority corresponding to the interaction category is higher than a classification priority corresponding to the perception category;
the classification priority corresponding to the perception category is higher than a classification priority corresponding to the default category; and
the classification priority corresponding to the default category is higher than a classification priority corresponding to the background category.

8. The method according to claim 5, wherein

if the target running category is the interaction category, the target scheduling priority falls within a first priority range;
if the target running category is the perception category, the target scheduling priority falls within a second priority range, and a priority in the second priority range is lower than a priority in a first priority range;
if the target running category is the default category, the target scheduling priority falls within a third priority range, and a priority in the third priority range is lower than a priority in a second priority range; or
if the target running category is the background category, the target scheduling priority falls within a fourth priority range, and a priority in the fourth priority range is lower than a priority in a third priority range.

9. The method according to claim 1, wherein the scheduling a resource of a processing system to the target task based on the target scheduling priority comprises:

determining, from a predefined mapping table between a scheduling priority and a weight, a target weight corresponding to the target scheduling priority; and
allocating the resource of the processing system to the target task based on a sum of the target weight and a weight of a task in a ready queue.

10. The method according to any one of claims 1 to 9, further comprising:

if the target scheduling priority is higher than a first threshold priority, determining running duration of the target task in the processing system in a first predefined time period;

if the running duration exceeds first threshold duration, adjusting the target scheduling priority of the target task to a first scheduling priority, wherein the first scheduling priority is lower than the target scheduling priority; and

scheduling the resource of the processing system to the target task based on the adjusted first scheduling priority, for subsequent running of the target task.

11. The method according to any one of claims 1 to 9, further comprising:

if the target scheduling priority is lower than a second threshold priority, determining waiting-to-run duration of the target task in the processing system in a second predefined time period;

if the waiting-to-run duration exceeds second threshold duration, adjusting the target scheduling priority of the target task to a second scheduling priority, wherein the second scheduling priority is higher than the target scheduling priority; and

scheduling the resource of the processing system to the target task based on the adjusted second scheduling priority, for subsequent running of the target task.

12. An electronic device, comprising:

at least one computing unit; and

at least one memory, wherein the at least one memory is coupled to the at least one computing unit, and stores instructions for execution by the at least one computing unit, and when the instructions are executed by the at least one computing unit, the electronic device is enabled to perform the following operations:

determining a target running category of an application from a plurality of predefined running categories based on a running status of the application, wherein applications in different running categories in the plurality of predefined running categories have different importance levels;

determining a target classification priority corresponding to the target running category;

determining a target scheduling priority of a target task in the application based on at least the target classification priority; and

scheduling a resource of a processing system to the target task based on the target scheduling priority, for running of the target task.

13. The device according to claim 12, wherein the determining a target scheduling priority of a target task in the application comprises:

determining a target task priority that is set for the target task; and

determining the target scheduling priority of the target task based on the target task priority and the target classification priority.

14. The device according to claim 12, wherein the plurality of running categories respectively correspond to a plurality of classification priorities; and

if an importance level of an application in a first running category in the plurality of running categories is greater than that of an application in a second running category in the plurality of running categories, a classification priority corresponding to the first running category is higher than a classification priority corresponding to the second running category.

15. The device according to claim 12, wherein

if the target running category is a first running category in the plurality of running categories, the target scheduling priority falls within a first priority range associated with the first running category; and

if an importance level of the first running category is greater than that of a second running category in the plurality of running categories, a priority within the first priority range is higher than a priority within a second priority range associated with the second running category.

16. The device according to claim 12, wherein the plurality of predefined running categories comprise at least:

an interaction category;

a perception category, wherein an importance level of the perception category is lower than that of the interaction category;

a default category, wherein an importance level of the default category is lower than that of the perception category; and

a background category, wherein an importance level of the background category is lower than that of the default category.

17. The device according to claim 16, wherein the determining a target running category of the application comprises:

if the application runs in a foreground and duration since a previous operation performed by a user on the application is less than threshold duration, determining that the application is in the interaction category;

if the application is in the interaction category and the duration since the previous operation performed by the user on the application exceeds the threshold duration, determining to switch the application from the interaction category to the perception category;

if the application is switched to run in a background and no task that is perceptible by the user runs in the application, determining that the application is in the background category;

if the application is switched to run in the foreground or the application runs in the background and has at least one task that is perceptible by the user, determining that the application is in the perception category; and

if the application is not in any one of the interaction category, the perception category, and the background category, determining that the application is in the default category.

18. The device according to claim 16, wherein

a classification priority corresponding to the interaction category is higher than a classification priority corresponding to the perception category;

the classification priority corresponding to the perception category is higher than a classification priority corresponding to the default category; and

the classification priority corresponding to the default category is higher than a classification priority corresponding to the background category.

19. The device according to claim 16, wherein

if the target running category is the interaction category, the target scheduling priority falls within a first priority range;

if the target running category is the perception category, the target scheduling priority falls within a second priority range, and a priority in the second priority range is lower than a priority in a first priority range;

if the target running category is the default category, the target scheduling priority falls within a third priority range, and a priority in the third priority range is lower than a priority in a second priority range; or

if the target running category is the background category, the target scheduling priority falls within a fourth priority range, and a priority in the fourth priority range is lower than a priority in a third priority range.

20. The device according to claim 12, wherein the scheduling a resource of a processing system to the target task based on the target scheduling priority comprises:

determining, from a predefined mapping table between a scheduling priority and a weight, a target weight corresponding to the target scheduling priority; and

allocating the resource of the processing system to the target task based on a sum of the target weight and a weight of a task in a ready queue.

21. The device according to any one of claims 12 to 20, wherein when the instructions are executed by the at least one computing unit, the electronic device is further enabled to perform the following operations:

if the target scheduling priority is higher than a first threshold priority, determining running duration of the target task in the processing system in a first predefined time period;

if the running duration exceeds first threshold duration, adjusting the target scheduling priority of the target task to a first scheduling priority, wherein the first scheduling priority is lower than the target scheduling priority; and

scheduling the resource of the processing system to the target task based on at least the adjusted first scheduling priority, for subsequent running of the target task.

22. The device according to any one of claims 12 to 20, wherein when the instructions are executed by the at least one computing unit, the electronic device is further enabled to perform the following operations:

if the target scheduling priority is lower than a second threshold priority, determining waiting-to-run duration of the target task in the processing system in a second predefined time period;
if the waiting-to-run duration exceeds second threshold duration, adjusting the target scheduling priority of the target task to a second scheduling priority, wherein the second scheduling priority is higher than the target scheduling priority; and
scheduling the resource of the processing system to the target task based on at least the adjusted second scheduling priority, for subsequent running of the target task.

23. A task scheduling apparatus, comprising:

a category determining unit, configured to determine a target running category of an application from a plurality of predefined running categories based on a running status of the application, wherein applications in different running categories in the plurality of predefined running categories have different importance levels;
a classification priority determining unit, configured to determine a target classification priority corresponding to the target running category;
a scheduling priority determining unit, configured to determine a target scheduling priority of a target task in the application based on at least the target classification priority; and
a scheduling unit, configured to schedule a resource of a processing system to the target task based on the target scheduling priority, for running of the target task.

24. A computer-readable storage medium, wherein the computer-readable storage medium stores a computer program, and when the program is executed by a processor, the method according to any one of claims 1 to 11 is implemented.

| Internal memory [121] | | Displays 1 to N [141] |
|---|---|---|
| External memory interface [122] | Processing system [110] | Cameras 1 to N [151] |
| Speaker [130A] | | |
| Receiver [130B] | Audio module [130] | Button [152] |
| Microphone [130C] | | |
| Headset jack [130D] | | |

Universal serial bus USB interface [160]

Charging input

Charging management module [170]

Power management module [171]

Battery [172]

FIG. 1

Within N ms after a
user operation

200

210

Interaction category

After the user operation

N ms later after
the user operation

220

Perception category

Switch to a foreground or a
background but a task that is
perceptible by a user exists

Switch to the background and
no task that is perceptible by
the user exists

230

Background
category

FIG. 2

300

/

TA

FG

SBG

BG

FIG. 3

410-1

Application

Task 411

Task 412

...

Task 413

410-2

Application

Task 421

Task 422

...

Task 423

410-3

Application

Task 431

Task 432

...

Task 433

441

TA

442

FG

443

SBG

444

BG

450

Task priority

100

101

102

...

120

121

122

...

138

139

FIG. 4

500

510

Determine a target running category of an application from a plurality of predefined running categories based on a running status of the application

520

Determine a target classification priority corresponding to the target running category

530

Determine a target scheduling priority of a target task in the application based on at least the target classification priority

540

Schedule a resource of a processing system to the target task based on the target scheduling priority, for running of the target task

FIG. 5

FIG. 6

EP 4 390 682 A1

CPU | T1 | T2 | T1 | T1 | T1 | T2 | T1

**Task 1 of an interactive application**

Running duration does not exceed first threshold duration

Running duration exceeds the first threshold duration

**High-priority scheduling** | Sleeping | Running | Running | Waiting to run | Running — **Low-priority scheduling**

Task switching | Task switching

**Task 2 of a native application**

Waiting-to-run duration does not exceed second threshold duration

**Waiting to run** | Running | Sleeping | Waiting to run — **Low-priority scheduling** | Running | Sleeping | Waiting to run — **High-priority scheduling** | **Low-priority scheduling**

Task switching | Task switching

Period 1 — **Waiting to run** — Period 2 — **Occupy**

Waiting-to-run duration exceeds the second threshold duration

FIG. 7

800

810

Category determining unit

820

Classification priority
determining unit

830

Scheduling priority
determining unit

840

Scheduling unit

FIG. 8

## INTERNATIONAL SEARCH REPORT

| International application No. |
| --- |
| **PCT/CN2022/118551** |

**A.    CLASSIFICATION OF SUBJECT MATTER**

G06F 9/48(2006.01)i

According to International Patent Classification (IPC) or to both national classification and IPC

**B.    FIELDS SEARCHED**

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

CNPAT, WPI, EPODOC, CNKI, IEEE: 应用, 程序, 类别, 分类, 种类, 重要程度, 优先级, 任务, 调度, App, application, program, category, sort, class, kind, importance, priority, assignment, mission, attemper, dispatch

**C.    DOCUMENTS CONSIDERED TO BE RELEVANT**

| Category* | Citation of document, with indication, where appropriate, of the relevant passages | Relevant to claim No. |
| --- | --- | --- |
| Y | CN 107402816 A (GUANGDONG OPPO MOBILE TELECOMMUNICATIONS CO., LTD.) 28 November 2017 (2017-11-28) claims 1-12, and description, paragraphs [0025]-[0123] | 1-24 |
| Y | US 2021182099 A1 (VMWARE, INC.) 17 June 2021 (2021-06-17) claims 1-20, and description, paragraphs [0011]-[0084] | 1-24 |
| A | CN 113220094 A (GUANGDONG OPPO MOBILE COMMUNICATIONS CO., LTD.) 06 August 2021 (2021-08-06) entire document | 1-20 |
| A | CN 107038069 A (BEIJING UNIVERSITY OF TECHNOLOGY) 11 August 2017 (2017-08-11) entire document | 1-20 |
| A | CN 107783833 A (HUAWEI TECHNOLOGIES CO., LTD.) 09 March 2018 (2018-03-09) entire document | 1-20 |

☐ Further documents are listed in the continuation of Box C.          ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **02 December 2022** | **13 December 2022** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/118551**

| Patent document cited in search report | | | Publication date (day/month/year) | Patent family member(s) | | | Publication date (day/month/year) |
|---|---|---|---|---|---|---|---|
| CN | 107402816 | A | 28 November 2017 | None | | | |
| US | 2021182099 | A1 | 17 June 2021 | None | | | |
| CN | 113220094 | A | 06 August 2021 | None | | | |
| CN | 107038069 | A | 11 August 2017 | None | | | |
| CN | 107783833 | A | 09 March 2018 | US | 2019188030 | A1 | 20 June 2019 |
| | | | | WO | 2018036505 | A1 | 01 March 2018 |
| | | | | EP | 3495950 | A1 | 12 June 2019 |

Form PCT/ISA/210 (patent family annex) (January 2015)